# EUROPEAN PATENT APPLICATION

(11) **EP 4 611 373 A1**
(43) Date of publication of application: **03.09.2025**
(21) Application number: 24182936.5
(22) Date of filing: 18.06.2024
(51) Int. Cl.: H04N 21/234, H04N 21/2343, H04N 21/4402

(54) **METHOD FOR PREDICTING ORIGINAL RESOLUTION OF VIDEO CONTENTS**

(30) Priority: 27.02.2024 KR 20240028048
(71) Applicant: Innowireless Co., Ltd., Gyeonggi-do 13590 (KR)
(72) Inventor: KWAK, Young Su, 16517 Suwon-si, Gyeonggi-do (KR); KWON, Oh Keol, 13611 Seongnam-si, Gyeonggi-do (KR); HONG, Sung Man, 18283 Hwaseong-si, Gyeonggi-do (KR)
(74) Representative: Mollekopf, Gerd Willi

(57) **Abstract**

The present disclosure relates to a method for predicting the original resolution of video contents using a non-reference video-based AI model built by training a training dataset composed of video contents with various resolutions through a deep learning method in order to overcome the limitations of existing metadata-based resolution determination methods.

A method for predicting an original resolution of video contents of the present disclosure, comprises: operation (a) of dividing the video contents that are resolution prediction targets into video clips of a fixed time length; operation (b) of downscaling the resolution of each of the video clips to a predetermined resolution; operation (c) of measuring the quality of video clips downscaled in operation (b) using a non-reference video-based AI model in order from low to high resolution, and calculating a quality score difference between video clips of two neighboring resolutions in order from low to high resolution; operation (d) of predicting a resolution of each of the video clips based on the quality score difference; and operation (e) of aggregating the resolutions of each of the video clips to predict an original resolution of the video contents.

In the above configuration, the resolutions to be downscaled are 360p, 480p, 720p, 1080p, 1440p, and 2160p.

## Description

### Technical Field

The present disclosure relates to a method for predicting an original resolution of video contents, and particularly to a method for predicting an original resolution of video contents using a non-reference video-based artificial intelligence (AI) model built by training a training dataset composed of video contents with various resolutions through a deep learning method to overcome limitations of existing metadata-based resolution determination methods.

### Description of the Related Art

Cognitive video quality may be divided into aesthetic score and technical score. The aesthetic score is information about the contents of the video, and generally speaking, a video with contents such as a teddy bear is perceived to be of higher quality than a video with contents such as scissors. The technical score is a score of technical quality, such as shakiness or broken pixels when shooting.

Recently, there has been a growing demand for ultra-high definition (UHD) video contents, also known as ultra-high definition or ultra-high resolution, which typically has a resolution of 3840x2160 (2160 pixel (p), 4K) or 8680x4320 (4320p, 8K) (we'll use 4K as an example in the following description). However, to capitalize on the growing demand for 4K video contents, fake 4K video contents that only change the resolution to 4K is widely distributed.

Traditionally, the most common way to determine the resolution of video contents is to read the file's metadata. Most video contents include metadata that contains technical information about the video. In other words, users may use video processing software or tools to read the metadata to determine the resolution of the video contents.

The advantage of this method is that for most video contents, the resolution contained in its metadata is the same as the resolution at the time of actual shooting, so the resolution of the video contents may be easily and quickly obtained without complicated math.

The disadvantage of this method is that the resolution identified in the metadata of the video contents may not be the same as the resolution at the time of actual shooting. For example, if a high-resolution video is downscaled to a lower resolution and then upscaled again, the metadata may show it as high-resolution, but the original resolution may be lower.

As such, there is a matter that metadata-based quality assessment methods in the related art are unable to distinguish between genuine 4K video and fake 4K video obtained by forcibly upscaling 4K video contents that has been intentionally downscaled to 1440p or lower resolution back to 4K resolution.

As a solution for that matter, fake 4K videos may be identified by comparing the Mean Opinion Scores (MOS) that people rate after watching random video contents at each resolution to see if there is a difference in the MOS value of, for example, 4K video contents and the MOS value of video contents at a lower resolution (assuming that the only difference between the two is the resolution).

However, this approach may be very time-consuming and expensive, for example, when it comes to authenticating video contents which may be hours long, and is difficult to do in real-time or automated fashion.

### References in Related Art

Related art 1: Korean Patent Application Publication No. 10-2022-0081246
Related art 2: Korean Patent Application Publication No. 10-2005-0107488
Related art 3: Korean Patent Application Publication No. 10-2023-0102658

### Disclosure of the Invention

### Technical Goals

In order to overcome limitations of existing metadata-based resolution determination methods, the present disclosure provides a method for predicting the original resolution of video contents using a non-reference video-based AI model built by training a training dataset composed of video contents with various resolutions through a deep learning method.

### Technical Solutions

The invention is defined in claim 1. Particular embodiments are set out in the dependent claims.

A method for predicting an original resolution of video contents of the present disclosure to achieve the aforementioned objectives, includes: operation (a) of dividing the video contents that are resolution prediction targets into video clips of a fixed time length; operation (b) of downscaling the resolution of each of the video clips to a predetermined resolution; operation (c) of measuring the quality of video clips downscaled in operation (b) using a non-reference video-based AI model in order from low to high resolution, and calculating a quality score difference between video clips of two neighboring resolutions in order from low to high resolution; operation (d) of predicting a resolution of each of the video clips based on the quality score difference; and operation (e) of aggregating the resolutions of each of the video clips to predict an original resolution of the video contents.

In the above configuration, the resolutions to be downscaled are 360p, 480p, 720p, 1080p, 1440p, and 2160p.

When predicting the resolution of the video contents, the maximum predictable resolution is min (U, the resolution of the original video contents).

The operation (d) includes: operation (d1) of determining whether the current quality score difference (D_{P}), which is the difference between the quality scores of the two adjacent resolution video clips currently being processed, is below the threshold (E); operation (d2) of, if the current quality score difference (D_{P}) is below the threshold (E), determining whether the previous quality score difference (D_{B}), which is the difference in quality scores between the previously processed adjacent resolution video clips, is below the threshold (E); and operation (d3) of, if both the current quality score difference (D_{P}) and the previous quality score difference (D_{B}) are below the threshold (E), predicting the lower resolution used in calculating the previous quality score difference (D_{B}) as the resolution of the video clip.

The operation (d) includes operation (d4) of, if at least one of the current quality score difference (D_{P}) or the previous quality score difference (D_{B}) is above the threshold (E), calculating the quality score difference up to the final resolution, and predicting the resolution at which the maximum quality score difference (Dₘₐₓ) among the current quality score difference (D_{P}) and the previous quality score difference (D_{B}), based on the final resolution, occurs as the resolution of the video clip.

The AI model used in operation (b) is built by training multiple (M) video training datasets with various resolutions ranging from 360p, 480p, 720p, 1080p, 1440p, and 2160p based on a deep learning.

The training dataset is the Youtube-User-Generated Contents (Youtube-UGC) dataset.

The number of training datasets (M) is more than 1,000.

In preparing the training dataset, videos with a high percentage of quality defects are removed by filtering by each defect category up to the maximum floor ((N/100)*M, where N is a natural number that may be set).

Quality defects remove video contents with a high percentage of defects that are (1) too dark, (2) too bright, and (3) too blurry by filtering for each of the defect items in (1), (2), and (3).

Video clips with quality defects are removed by filtering after operation (a) and before operation (b).

For each of the video clips, the quality improvement factor (A) between the lowest and highest resolutions is calculated and averaged to determine the final quality improvement factor for that video contents.

In operation (e), the resolution of the video clip with the highest resolution among the resolutions of each of the video clips is predicted as the resolution of its video contents.

### Effects

According to the method of predicting the original resolution of video contents of the present disclosure, an AI model based on non-reference video may be used to accurately predict the original resolution of video contents, which may help service providers, such as over-the-top (OTT) providers, who provide a large number of videos, to identify fake 4K videos and the like that have a quality unrelated to the resolution contained in the metadata. As a result, video service providers may optimize their service operational costs, and customers may enjoy highly reliable 4K video.

In addition, by providing a secondary indicator of how much the quality of even true 4K video content has improved compared to when it was delivered at a lower resolution, video service providers may prioritize true 4K video to be preserved in environments with limited service capacity, such as when storage capacity is insufficient, and thus reduce service operation costs.

### Brief Description of the Drawings

FIGS. 1a and 1b are flow diagrams to illustrate a method for predicting the original resolution of video contents of the present disclosure.
FIGS. 2a through 2c are illustrative of an exemplary method of predicting the resolution of each of the video clips in the method of predicting the original resolution of video contents of the present disclosure.

### Detailed Description for Carrying Out the Invention

Generally, the present disclosure relates to a method for predicting the original resolution of video contents using a non-reference video-based AI model built by training a training dataset composed of video contents with various resolutions through a deep learning method in order to overcome the limitations of existing metadata-based resolution determination methods.

A method for predicting an original resolution of video contents of the present disclosure, comprises: operation (a) of dividing the video contents that are resolution prediction targets into video clips of a fixed time length; operation (b) of downscaling the resolution of each of the video clips to a predetermined resolution; operation (c) of measuring the quality of video clips downscaled in operation (b) using a non-reference video-based AI model in order from low to high resolution, and calculating a quality score difference between video clips of two neighboring resolutions in order from low to high resolution; operation (d) of predicting a resolution of each of the video clips based on the quality score difference; and operation (e) of aggregating the resolutions of each of the video clips to predict an original resolution of the video contents.

In the configuration herein, the resolutions to be downscaled are preferably 360p, 480p, 720p, 1080p, 1440p, and 2160p.

The main improvement goal of the method of predicting the original resolution of video contents of the present disclosure is to overcome the limitations of the existing resolution determination method based only on the metadata of the video contents, and to propose a method for predicting the originals resolution of the video contents that affects the quality of the video contents, and the specific improvement goals are as follows.

First, obtaining human-perceived quality-based resolution: we propose a method for predicting the resolution of video contents based on the original quality of the video, that is, not based on the information in the metadata, but on the actual perceived quality of the human experience with the video contents.

Second, operable without metadata: through a non-reference video-based quality measurement method that is not limited by the type of codec or the presence or absence of metadata, it may be applied to any video as long as only the RGB of the video contents may be obtained. As a result, we propose a method that may be applied to virtually any video contents as long as it is playable, with or without metadata.

Third, separately managing quality improvement factor (A) based on resolution: for each video content, the factor of the quality of the video at the highest resolution (for example, 4K) and the quality of the video at the lowest resolution (for example, 144p) are identified for each video according to the degree of improvement in human perception quality, so that videos with greater quality improvement as the resolution increases may be selected and managed.

For example, a color movie may have a larger human perception quality improvement factor when viewed in 4K compared to a black-and-white movie. As such, video contents with a large quality improvement factor when viewed in 4K video is a high priority for preservation in environments where physical storage space for OTT providers' service delivery is scarce, so it provides the ability to select, archive, and manage such video contents.

Fourth, pre-filtering for quality defects in the training and prediction process: video contents with a high percentage of outliers, for example, too dark, too bright, or too blurry, may not properly train quality variations when training an AI model based on non-reference videos. Therefore, we filter out up to N% of the video contents in the training dataset that has a high proportion of these outliers so that the AI model that measures video quality is less sensitive to outlier data and may be trained to measure quality based solely on resolution, and the video segments with these outlier characteristics are also excluded from the resolution prediction process.

This prevents outlier characteristics, such as darkness in some parts of the movie, from being predicted as low resolution, such as 144p, even if the movie is truly UHD video contents, because some parts of the movie have low resolution quality characteristics, such as darkness.

Fifth, preserving aesthetic score and other technical score as much as possible in the resolution prediction process: in the present disclosure, the quality of the downscaled video contents is measured multiple times while forcibly downscaling the physical resolution of the video contents to a resolution lower than, for example, the metadata-based resolution. At this time, make sure that only the resolution changes during the downscaling process, and that no other codec information or color space information changes at the same time.

That is, since the downscaling process preserves the aesthetic score of the video contents as identical as possible and measures the quality of the video contents by changing only the resolution of the technical elements, the effect of the codec on the quality is excluded, and only the degree to which the resolution affects the quality may be measured more precisely.

Sixth, more accurate resolution prediction due to the introduction of the concept of tolerance resolution step: it predicts resolutions based on the range from lowest to highest among the downscaled resolutions, but some of the eight commonly used resolutions (144p, 240p, 360p, 480p, 720p, 1080p, 1440p, and 2160p) may contain segments with relatively small quality improvements compared to the other segments.

For example, there may be video contents where the amount of quality improvement perceived by humans may be relatively small or nonexistent at the 720p->1080p resolution increment segment, but exceptionally noticeable at the 1080p->1440p resolution increment segment. To do this, we introduce a tolerance resolution step number (W), in the process of raising the downscaled resolution reversely to see if there was any quality improvement, to ensure that the quality of the video contents in the above example is not incorrectly predicted to be 720p just because there is a quality improvement in the 1080p->1440p segment but very little quality improvement in the 720p->1080p segment (for example, a difference in MOS value of less than 0.02).

Hereinafter, with reference to the accompanying drawings, a preferred example embodiment of the method for predicting the original resolution of video contents of the present disclosure will be described in detail.

The main technical idea of the present disclosure's method for predicting the original resolution of video contents is to downscale the original video to multiple relatively low resolutions and then reverse the process to measure and observe the quality change while increasing the resolution in order to measure only the resolution-dependent quality change in technical elements while leaving the aesthetic elements of the video contents intact.

In this process, the original resolution of the video contents is predicted as the resolution that increases in resolution but not in quality, and outlier characteristics such as overly bright, overly dark, or overly blurred segments of the screen are excluded from the resolution prediction process to improve the accuracy of the resolution prediction.

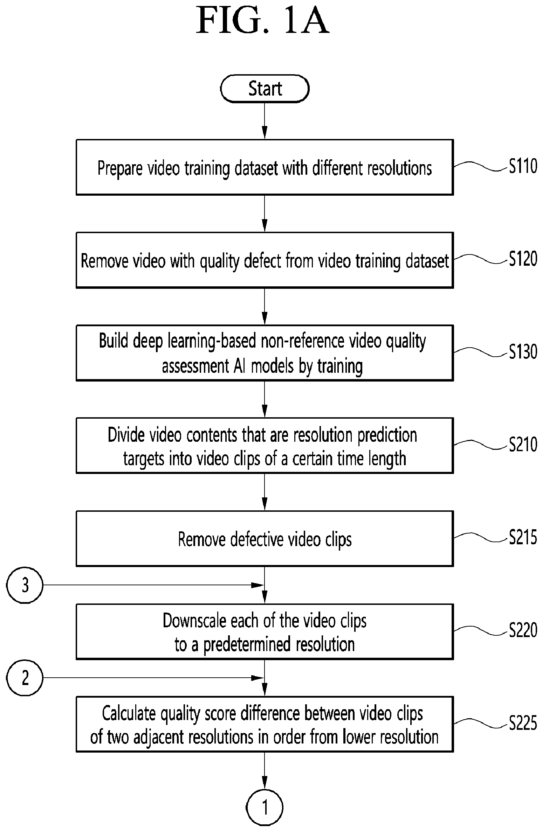

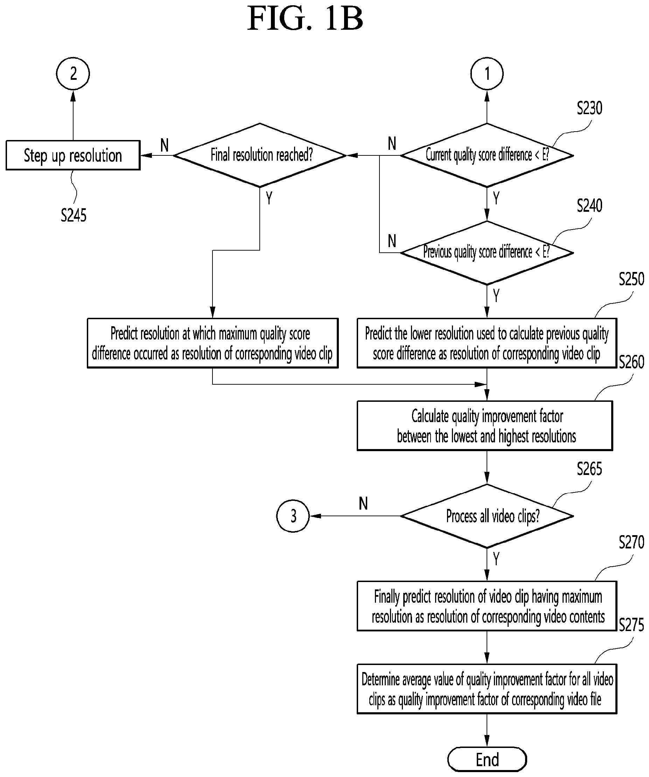

FIGS. 1a and 1b are flow diagrams for illustrating a method for predicting the original resolution of video contents of the present disclosure, which broadly comprises a process of building an AI model for non-reference based video quality measurement (process A: operations S110 to S130) and a process of predicting the original resolution of arbitrary video contents through the built AI model (process B: operations S210 to S275).

First, in operation S 110 of the AI Model building process (Part A), prepare a training dataset with different resolutions from 360p to 2160p, for example, the Youtube-User-Generated Contents (Youtube-UGC) dataset (https://media.withyoutube.com). In this case, the number of video contents (M) in the dataset for training could be 1381. In this process, we also separately define the maximum resolution (U) used for training, which in the example above could be 2160p.

Next, in operation S120, video contents having quality defects in the training dataset, for example, video contents having a high percentage of defects in which the screen is too dark, too bright, too blurry and the like, is filtered and removed, for example, filtered and moved according to each defect item up to a floor ((N/100)*M). For example, if we assume that we want to remove all the video contents that has a high percentage of defects such as (1) too dark, (2) too bright, and (3) too blurry, then the number of removal steps (S) will be 3. In the above example, in case of N=1, floor((N/100)*M) is 13, and for each of the defect items in (1), (2), and (3) above, 13 videos are removed as defective video contents.

Meanwhile, an algorithm capable of numerically measuring darkness, an algorithm capable of numerically measuring lightness, or an algorithm capable of numerically measuring blurriness may be used as appropriate to determine whether the item is defective. The process of removing defective video contents may be done sequentially, eventually S*floor((N/100)*M) videos are removed, which means 39(=3*13) videos are removed in the case of Youtube-UGC dataset, and the number of trainable videos is 1342.

Here, S and N are configurable variables, and M and U are dataset-dependent variables for training. U is the maximum resolution that a user may predict based on the perceived quality of the video, and a training dataset with such U may be selected as appropriate. In this case, M is preferably 1,000 or more.

Next, in operation S130, a deep learning-based non-reference video quality measurement AI model is built using the training dataset to predict the video quality of various resolutions in a resolution-dependent manner with less influence from outliers.

Next, in operation S210 of the original resolution prediction process (process B), the video contents that are resolution prediction targets is divided into video clips of a certain time length, for example, 10 seconds long, and a total of 360 video clips are obtained, for example, assuming a video content of 1 hour (3600 seconds) long.

Next, at operation S215, video clips that are unsuitable for utilization in the resolution prediction among the total video clips, such as video clips that are too dark, too bright, or too blurry, are removed via filtering.

The presence of a defect in each of the video clips may be determined by the algorithm used in operation S120, for example, if the video contents with a brightness level of less than 5.12 out of 100 is viewed as an outlier during the training process, then the video clip with a brightness level of less than 5.12 is viewed as an outlier during the prediction process. Using the above case as an example, if 2 video clips out of a total of 360 clips are too bright, and no video clips are too dark or too blurry, only 358 video clips will be utilized for resolution prediction.

Next, in operation S220, for each of the video clips, the resolution is downscaled to a predetermined resolution, such as 360p, 480p, 720p, 1080p, 1440p, and 2160p, wherein the maximum predictable resolution of the video contents when predicting the resolution is min (U, the resolution of the original video contents).

Next, in operation S225, the quality of the previously downscaled video clips is measured using the AI model built in operation S130, for example, by measuring the quality of the video clips of each resolution in order from lowest to highest resolution, and then calculating a quality score difference (D) between video clips of two neighboring resolutions in order from lowest to highest resolution.

Next, at operation S230, it is determined whether the difference between the quality scores of the video clips of two neighboring resolutions currently being processed (D_{P}); hereinafter referred to as the "current quality score difference") is below a predetermined threshold (E).

At operation S230, if the current quality score difference (D_{P}) is below the threshold (E), then proceed to operation S240 again to determine if the quality score difference between the previously processed video clips of adjacent resolutions (D_{B}); hereinafter referred to as the "previous quality score difference") is below the threshold (E). In operation S240, if the previous quality score difference (D_{B}) is below the threshold (E), then the video clip has little difference in quality across the three resolutions, so proceed to operation S250 to predict the lower resolution used to calculate the previous quality score difference (D_{P}) as the resolution of the video clip.

On the other hand, if the current quality score difference (D_{P}) at operation S230 is above the threshold (E), proceed to operation S235 to determine whether the final resolution, for example, 2160p, has been reached. If the final resolution is not reached in operation S235, proceed to operation S245 to increase the resolution to be processed by one level, and then return to operation S225.

If the previous quality score difference (D_{B}) in operation S240 is above the threshold (E), proceed to operation S235. If the resolution to be processed in operation S235 has reached a final resolution, proceed to operation S255 to predict the resolution of the video clip at which the maximum quality score difference (Dₘₐₓ) occurs among the current quality score difference (D_{P}) and the previous quality score difference (D_{B}) as the resolution of the video clip based on the final resolution.

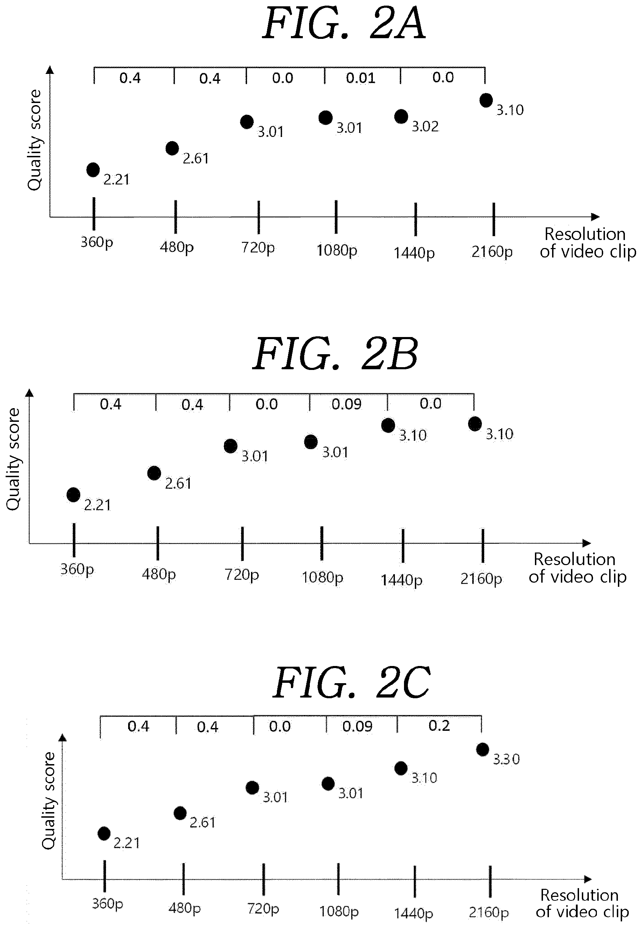

FIGS. 2a to 2c are diagrams for exemplarily illustrating a method for predicting the resolution of each of the video clips in the method for predicting the original resolution of video contents of the present disclosure, wherein a threshold (E) of 0.02 is used to illustrate. First, as exemplified in FIG. 2a, assuming that the quality scores of the video clips having resolutions of 360p, 480p, 720p, 1080p, 1440p, and 2160p are 2.21, 2.61, 3.01, 3.01, 3.02, and 3.10, respectively, the quality score difference (D) between 360p->480p and 480p->720p is 0.4, respectively, which is above the threshold (E=0.02), so the determination results of operations S230 and S240 both correspond to "N".

Therefore, it proceeds to operation S235 to determine if the final resolution has been reached, and since the current processed resolution is 720p, which is not the final resolution, it proceeds to operation S245 to calculate the quality score difference (D) between 720p->1080p, which is the next step up in resolution.

After iterating in this manner, in the example of FIG. 2a, the current quality score difference (D_{P}) for 1080p->1440p is 0.01 and the previous quality score difference (D_{B}) for 720p->1080p is 0, both of which are below the threshold (E), so proceed to operation S250 to predict 720p which is the lower resolution used to calculate the previous quality score difference (D_{B}), as the resolution of the video clip.

Next, as exemplified in FIG. 2b, assuming that the quality scores of the video clips having resolutions of 360p, 480p, 720p, 1080p, 1440p, and 2160p are 2.21, 2.61, 3.01, 3.01, 3.10, and 3.10, respectively, since no cases are determined as "Y" in both operation S230 and operation S240, 1440p is predicted as the resolution of the video clip, which is the resolution with the maximum quality score difference (Dₘₐₓ = 0.09) among the current quality score difference (D_{P}) and the previous quality score difference (D_{B}) based on the final resolution, according to the result of calculating the quality score difference (D) up to the final resolution.

Finally, as exemplified in FIG. 2c, assuming that the quality scores of the video clips having resolutions of 360p, 480p, 720p, 1080p, 1440p, and 2160p are 2.21, 2.61, 3.01, 3.01, 3.10, and 3.30, respectively, since no cases are determined as "Y" in both operation S230 and operation S240, 2160p is predicted as the resolution of the video clip, which is the resolution where the maximum quality score difference (Dₘₐₓ = 0.2) occurred in operation 255 based on the result of calculating the quality score difference (D) up to the final resolution.

Referring back to FIG. 1b, operation S260 calculates the quality improvement factor (A) between the lowest and highest resolution for each of the video clips, and, in the example in FIG. 2a, a quality score at the lowest resolution of 360p is 2.21 and a quality score at the highest resolution of 2160p is 3.10, so a quality improvement factor (A) becomes 1.40 (=3.10/2.21).

Next, operation S265 determines if all video clips have been processed, which returns to operation S220 if any unprocessed video clips are present, otherwise proceeds to operation S270 to finally predict the resolution of the video clip with the highest resolution as the resolution of the video contents. In the example above, if some of the 358 total video clips are predicted to be 360p or 720p, but some are predicted to be 1440p, the final resolution of the video contents is predicted to be 1440p. This is because the quality difference between low and high resolutions may not be present in some segments due to dynamic encoding, and the like.

Finally, in operation S275, the service operation efficiency may be improved by determining the average value of the quality improvement factor (A) of each of the video clips as the final quality improvement factor of the corresponding video contents. For example, assume that the original resolutions of two video contents predicted by the original resolution prediction method described in FIG. 1 are both predicted to be 1440p, and that the quality improvement factors (A) of the respective video contents are 1.40 and 1.70. In this state, if only one video needs to be downscaled to 1080p due to insufficient storage capacity, the video contents that should be prioritized for downscaling may be the video contents with a relatively lower quality improvement factor (A) of 1.40, thereby improving the service operation efficiency.

The above description is provided to provide an understanding of the methods described herein and is not intended to limit the disclosure.

The present disclosure may be modified variously and may have various example embodiments. The various scores or thresholds mentioned in the foregoing example embodiments are exemplary and may be modified as appropriate. For example, while the foregoing example embodiments are described with a maximum resolution of 2160p, they are not limited to, and may extend to 8K (4320p) or higher. In the example embodiment described above, the number of tolerance resolution steps (W) was set to 2 steps (operation S230 and operation S240) for the current and immediate past, but this could be changed to 3 steps including just before the immediate past. It may also be possible to judge the defective video contents or defective video clip by a score that quantifies the defect items as a whole, rather than judging the defective video contents or defective video clip by defect items such as too dark, too bright, too flowing, and the like.

Accordingly, the scope of the present disclosure shall be determined by the following claims.

## Claims

1. A method for predicting an original resolution of video contents, the method comprising:
operation (a) of dividing video contents that are resolution prediction targets into video clips of a fixed time length;
operation (b) of downscaling a resolution of each of the video clips to a predetermined resolution;
operation (c) of measuring a quality of video clips downscaled in operation (b) using a non-reference video-based artificial intelligence (AI) model in order from low to high resolution, and then calculating a quality score difference between video clips of two neighboring resolutions in order from low to high resolution;
operation (d) of predicting a resolution of each of the video clips based on the quality score difference; and
operation (e) of aggregating the resolution of each of the video clips to predict an original resolution of the video contents.

2. The method of claim 1, **characterized in that** the resolutions to be downscaled are 360p, 480p, 720p, 1080p, 1440p, and 2160p.

3. The method of claim 1 or 2, **characterized in that**, when predicting the resolution of the video contents, the maximum predictable resolution is min (U, the resolution of the original video contents).

4. The method of claim 1, 2 or 3, **characterized in that** the operation (d) comprises:
operation (d1) of determining whether a current quality score difference (D_{P}), which is a difference between quality scores of two adjacent resolution video clips currently being processed, is below a threshold (E);
operation (d2) of, if the current quality score difference (D_{P}) is below the threshold (E), determining whether a previous quality score difference (D_{B}), which is a difference in quality scores between previously processed adjacent resolution video clips, is below the threshold (E); and
operation (d3) of, if both the current quality score difference (D_{P}) and the previous quality score difference (D_{B}) are below the threshold (E), predicting the lower resolution used in calculating the previous quality score difference (D_{B}) as the resolution of the video clip.

5. The method of claim 4, **characterized in that** the operation (d) comprises:
operation (d4) of, if at least one of the current quality score difference (D_{P}) or the previous quality score difference (D_{B}) is above the threshold (E), calculating the quality score difference up to the final resolution, and predicting the resolution at which the maximum quality score difference (Dₘₐₓ) among the current quality score difference (D_{P}) and the previous quality score difference (D_{B}), based on the final resolution, occurs as the resolution of the video clip.

6. The method of any of the previous claims, **characterized in that** the AI model used in operation (b) is built by training multiple (M) video training datasets with various resolutions ranging from 360p, 480p, 720p, 1080p, 1440p, and 2160p based on a deep learning.

7. The method of claim 6, **characterized in that** the training dataset is the Youtube-UGC (User-Generated Contents) dataset.

8. The method of claim 6 or 7, **characterized in that** the number of training datasets (M) is more than 1,000.

9. The method of claim 6, 7 or 8, **characterized in that** in preparing the training dataset, videos with a high percentage of quality defects are removed by filtering by each defect category up to the maximum floor ((N/100)*M, where N is a natural number that may be set).

10. The method of claim 9, **characterized in that** quality defects remove video contents with a high percentage of defects that are (1) too dark, (2) too bright, and (3) too blurry by filtering for each of the defect items in (1), (2), and (3).

11. The method of claim 9 or 10, **characterized in that** video clips with quality defects are removed by filtering after operation (a) and before operation (b).

12. The method of any of the preceding claims, **characterized in that**, for each of the video clips, the quality improvement factor (A) between the lowest and highest resolutions is calculated and averaged to determine the final quality improvement factor for the video contents.

13. The method of any of the preceding claims, **characterized in that** in operation (e), a resolution of a video clip with the highest resolution among the resolutions of each of the video clips is predicted as the resolution of the video contents.
